# EUROPÄISCHE PATENTANMELDUNG

(11) **EP 0 771 112 A2**
(43) Veröffentlichungstag der Anmeldung: **02.05.1997**
(21) Anmeldenummer: 96202930.2
(22) Anmeldetag: 21.10.1996
(51) Int. Cl.: H04N 7/01

(54) **Bildsignal-Decoder und - Umsetzer**

(30) Priorität: 28.10.1995 DE 19540301
(71) Anmelder: Philips Patentverwaltung GmbH, 22335 Hamburg (DE); PHILIPS ELECTRONICS N.V., 5621 BA Eindhoven (NL)
(72) Erfinder: Dreier, Hans-Joachim, Dr., c/o Philips, 22335 Hamburg (DE)
(74) Vertreter: von Laue, Hanns-Ulrich, Dipl.-Ing.

(57) **Zusammenfassung**

Für eine Schaltungsanordnung mit einem digitalen Farbdecoder, welcher ein digitales Farbsignal eines Bildsignals decodiert, wobei das Farbsignal in einem ersten Abtasttakt vorliegt, der auf die Eigenschaften des Farbsignals und/oder des Bildsignals optimiert ist, ist zur optimalen flexiblen Anpassung an verschiedene Umgebungsbedingungen vorgesehen, daß dem Farbdecoder ein Abtastratenumsetzer nachgeschaltet ist, der die vom Decoder ermittelten digitalen Farbkomponentensignale in einen zweiten Abtasttakt umsetzt, der an Anforderungen nachgeschalteter Schaltungselemente zur Signalverarbeitung und/oder Bilddarstellung angepaßt ist.

## Beschreibung

Die Erfindung betrifft eine Schaltungsanordnung mit einem digitalen Farbdecoder, welcher ein digitales Farbsignal eines Bildsignals decodiert, wobei das Farbsignal in einem ersten Abtasttakt vorliegt, der auf die Eigenschaften des Farbsignals und/oder des Bildsignals optimiert ist.

Bekannte digitale Farbdecoder, welche ein in einem ihnen zugeführten digitalen Bildsignal enthaltenes Farbsignal decodieren, aus dem Farbsignal und dem Bildsignal Komponentensignale erzeugen, arbeiten mit einem Abtasttakt des digitalen Bildsignals, der speziell an die Eigenschaften dieses Bildsignals und/oder des in ihm enthaltenen Farbsignals angepaßt ist. Beispielsweise kann der Abtasttakt an die Horizontalfrequenz des Bildsignals oder die Farbhilfsträgerfrequenz des Farbsignals gekoppelt sein. Damit wird eine möglichst störungsarme Decodierung des Farbsignals erzielt bzw. durch die Kopplung an die Horizontalfrequenz des Bildsignals eine möglichst störungsarme Verarbeitung des gesamten Bildsignals.

Es ist Aufgabe der Erfindung, eine derartige Schaltungsanordnung dahingehend weiter zu entwickeln, daß die von ihr erzeugten Komponentensignale für nachfolgende Schaltungsanordnungen optimal verarbeitbar sind.

Diese Aufgabe wird erfindungsgemäß dadurch gelöst, daß dem Farbdecoder ein Abtastratenumsetzer nachgeschaltet ist, der die vom Decoder ermittelten digitalen Farbkomponentensignale in einen zweiten Abtasttakt umsetzt, der an Anforderungen nachgeschalteter Schaltungselemente zur Signalverarbeitung und/oder Bilddarstellung anpaßbar ist.

Digitale Bildsignale werden zunehmend nicht nur in digital arbeitenden Fernsehempfängern sondern auch in anderen Geräten zur Verarbeitung derartiger Bildsignale verarbeitet. Bei derartigen Geräten kann es sich beispielsweise um digitale Videorecorder oder Personal-Computer handeln. Derartige Geräte arbeiten meist mit vorgegebenen Taktraten, die an die Signalverarbeitung in diesen Geräten angepaßt sind. Beispielsweise in Computern sind diese Takte für die Bildverarbeitung mehr oder weniger vorgegeben. Mittels der erfindungsgemäßen Schaltungsanordnung, bei der dem Farbdecoder ein Abtastratenumsetzer nachgeschaltet ist, gelingt es, die in dem ersten Abtasttakt von dem Farbdecoder gelieferten Komponentensignale so weiter zu verarbeiten, daß sie in nachgeschalteten Schaltungselementen, beispielsweise von Geräten der obengenannten Art, optimal weiter verarbeitbar ist. Arbeiten diese zweiten Geräte in einem zweiten Abtasttakt, so gelingt es mittels des Abtastratenumsetzers, die Komponentensignale von dem ersten in den zweiten Abtasttakt in der Weise umzusetzen, daß der zweite Abtasttakt an die Anforderungen der Schaltungsanordnungen des nachgeschalteten Gerätes anpaßbar ist. Diese Anpassung kann gegebenenfalls auch flexibel sein, beispielsweise wenn in einem Computer für verschiedene Darstellungsformate verschiedene Abtastraten gewählt werden.

Darüber hinaus gelingt es gewünschtenfalls mittels dieser Schaltungsanordnung, das Bild-Seiten-/Höhen-Verhältnis des Bildsignals zu verändern. Ferner können Bildsignale mit verschiedenen Bild-Seiten-/Höhen-Verhältnissen an den geforderten Datenstrom bzw. die geforderte Abtastrate nachgeschalteter Schaltungselemente in der Weise angepaßt werden, daß sie für eine Bilddarstellung, die mittels der nachgeschalteten Schaltungselemente vorgenommen wird, anpaßbar ist. Beispielsweise kann ein Bildsignal, das ein 16 : 9 Seiten/Höhen-Verhältnis aufweist, jedoch in dem ersten Abtasttakt in einem Horizontalsynchronraster entsprechend einem 4 : 3 Höhen/Seiten-Verhältnis übertragen wird, auf diese Weise zur weiteren Verarbeitung an eine Bilddarstellung mit einem 16 : 9 Seiten/Höhen-Verhältnis angepaßt werden.

Die erfindungsgemäße Schaltungsanordnung ist aufgrund ihrer flexiblen Anpassung an verschiedene Randbedingungen für unterschiedliche Gerätearchitekturen anpaßbar. Damit bietet die Schaltungsanordnung die Möglichkeit, mit einer Bauweise eine einfache Anpassung an verschiedene Gerätearchitekturen vorzunehmen.

Die erfindungsgemäße Schaltungsanordnung ist auch für analoge Bildsignale einsetzbar. In diesem Falle ist, wie gemäß einer Ausgestaltung der Erfindung vorgesehen ist, dem digitalen Farbdecoder ein Analog/Digital-Umsetzer vorgeschaltet, der ein diesem zugeführtes analoges Farbsignal und ein analoges Bildsignal, wobei das Farbsignal gegebenenfalls in dem Bildsignal enthalten sein kann, in digitale Signale mit dem ersten Abtasttakt umsetzt.

Eine weitere Ausgestaltung der Erfindung weist die Merkmale auf, daß in dem Abtastratenumsetzer ein Pufferspeicher vorgesehen ist, mittels dessen sichergestellt wird, daß der Farbdecoder ausgangsseitig einen kontinuierlichen Datenstrom der Farbkomponentensignale in dem zweiten Abtasttakt liefert, und daß der Pufferspeicher vorzugsweise auch zur Korrektur ggf. in dem Farbsignal vorhandener Zeitbasisschwanküngen eingesetzt wird.

Auf diese Weise wird in jedem Falle sichergestellt, daß der von der Schaltungsanordnung ausgangsseitig im zweiten Abtasttakt gelieferte Datenstrom lückenlos, d.h. ohne Störungen, erscheint und daß andererseits in der erfindungsgemäßen Schaltungsanordnung kein Datenüberlauf eintritt.

Wie gemäß einer weiteren Ausgestaltung der Erfindung vorgesehen ist, können vorteilhafterweise der zweite Abtasttakt und der erste Abtasttakt miteinander verkoppelt sein. Damit ist sichergestellt, daß zwischen diesen Abtasttakten keine Drift eintritt.

Weitere vorteilhafte Ausgestaltungen der Erfindung sind in weiteren Unteransprüchen angegeben.

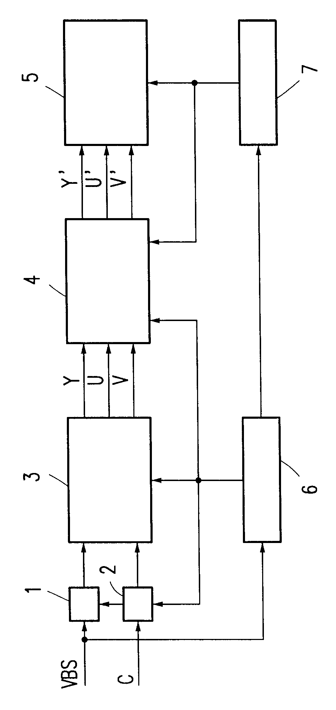

Nachfolgend wird ein Ausführungsbeispiel der Erfindung anhand der Zeichnung näher erläutert.

Die einzige Figur der Zeichnung zeigt in Form eines schematischen Blockschaltbildes eine erfindungsgemäße Schaltungsanordnung, der eingangsseitig ein Bildsignal VBS zugeführt wird. Zu diesem Bildsignal gehört ein Farbsignal C. Im Bereich der Bildsignalverarbeitung wird es auch für einen Übertragungsstandard wie beispielsweise PAL oder NTSC zunehmend üblich, das Farbsignal soweit wie möglich getrennt von dem übrigen Bildsignal dem Decoder zuzuführen.

Das Bildsignal VBS wird einem ersten Analog/Digital-Umsetzer 1 zugeführt; das Farbsignal C einem zweiten Analog/Digital-Umsetzer 2.

Den beiden Analog/Digital-Umsetzern 1 und 2 ist ein Farbdecoder 3 nachgeschaltet, bei dem es sich beispielsweise um einen Farbdecoder handeln kann, der multistandardfähig ist, d.h. der Farbsignale verschiedener Übertragungsstandards, wie z.B. PAL, SECAM oder NTSC, decodieren kann.

Der Farbdecoder 3 liefert ausgangsseitig digitale Komponentensignale, die in der Darstellung gemäß der Figur mit Y, U und V gekennzeichnet sind.

In diesem Beispielsfalle wird davon ausgegangen, daß es sich bei dem Bildsignal VBS und dem zugehörigen Farbsignal C um ein PAL-Signal handelt. Das von dem Farbdecoder 3 ausgangsseitig gelieferte Komponentensignal Y gibt dann die Leuchtdichte und die Signale U und V die Farbkomponenten an.

Diese Signale gelangen nachfolgend an einen Abtastratenumsetzer 4, der ausgangsseitig entsprechende Signale liefert, die jedoch mit einer anderen Abtastrate getaktet sind. Diese Signale sind in der Figur mit Y', U' und V' gekennzeichnet.

Diese Signale werden nachfolgend in einer in der Figur lediglich schematisch dargestellten Anordnung 5 weiterverarbeitet, welche Schaltungselemente enthält, die auf die Abtastrate, mit der die Signale Y', U' und V' vorliegen, optimiert ist bzw. die mit dieser Abtastrate arbeitet.

Die Schaltungsanordnung gemäß der Figur weist ferner eine Schaltungsanordnung 6 zur Takterzeugung auf. Diese kann beispielsweise einen aus dem Bildsignal VBS abgeleiteten ersten Abtasttakt erzeugen. Mit diesem Abtasttakt werden der erste und der zweite Analog/Digital-Umsetzer 1 bzw. 2, der Farbdecoder 3 und der Abtastratenumsetzer 4 angesteuert.

Das analoge Bildsignal VBS und das zugehörige Farbsignal C werden in den Umsetzern 1 und 2 mit diesem Abtasttakt in digitale Signale umgesetzt, die dem Farbdecoder 3 zugeführt werden. Die Signalverarbeitung innerhalb des Farbdecoders 3 findet mit diesem ersten Abtasttakt statt. Auch die von dem Decoder 3 ausgangsseitig gelieferten Komponentensignale Y, U und V liegen in diesem ersten Abtasttakt vor.

Der Abtastratenumsetzer setzt diese im ersten Abtasttakt vorliegenden Signale Y, U und V in die Signale Y', U' und V' um, die in einem zweiten Abtasttakt vorliegen. Dieser zweite Abtasttakt wird von einer zweiten Schaltungsanordnung 7 zur Taktsignalerzeugung generiert. Der zweite Abtasttakt ist optimiert auf die durch den Block 5 symbolisierten nachgeschalteten Schaltungselemente.

Die zweite Schaltungsanordnung 7 zur Takterzeugung liefert den von ihr erzeugten zweiten Abtasttakt sowohl an den Abtastratenumsetzer 4 wie an die nachgeordneten Schaltungselemente 5.

Gegebenenfalls kann der zweite Abtasttakt vorteilhafterweise aus dem von der ersten Schaltungsanordnung zur Abtasttakterzeugung 6 erzeugten ersten Abtasttakt abgeleitet werden.

Bei den durch den Schaltungsblock 5 symbolisierten nachgeschalteten Schaltungselementen kann es sich beispielsweise um solche eines Personal-Computers oder eines digitalen Videorecorders handeln. Derartige Geräte arbeiten meist mit vorgegebenen Abtastraten, die in dem Ausführungsbeispiel gemäß der Figur dem zweiten Abtasttakt, der von der zweiten Schaltungsanordnung 7 zur Abtasttakterzeugung erzeugt wird, entsprechen.

Hingegen ist der erste Abtasttakt, wie er von der ersten Schaltungsanordnung 6 zur Taktsignalerzeugung generiert wird, an die Eigenschaften des Farbsignals C bzw. des Bildsignals VBS angepaßt. Beispielsweise eine Kopplung dieses ersten Abtasttakts an das Synchronsignalraster des Bildsignals VBS hat den Vorteil, daß der Farbdecoder auf Zeitbasis-Schwankungen des Bildsignals bzw. seines Synchronsignalrasters besser reagieren kann bzw. daß sich diese Zeitbasis-Schwankungen möglichst wenig störend bei der Farbdecodierung bemerkbar machen.

Insgesamt wird durch diese Schaltungsanordnung erreicht, daß einerseits eine optimale Farbdecodierung vorgenommen werden kann, und daß andererseits dieses decodierte digitale Bildsignal optimal an nachfolgende Schaltungsanordnungen anpaßbar ist. Dabei kann die Anpassung an die verschiedenen Taktraten gegebenenfalls auch laufend anpaßbar sein, wie dies beispielsweise in einem Personal-Computer zur Darstellung mit verschiedenen Formaten bzw. Pixelraten vorteilhaft ist. Es besteht darüberhinaus die Möglichkeit, eine Umwandlung in dem Bildseiten/Höhenverhältnis des Bildsignals vorzunehmen.

Der in der Figur schematisch dargestellte Abtastratenumsetzer kann gegebenenfalls einen Pufferspeicher aufweisen. Mittels dieses Pufferspeichers kann sichergestellt werden, daß der von dem Farbdecoder 3 ausgangsseitig in dem zweiten Abtasttakt vorliegende Datenstrom der Komponentensignale kontinuierlich ist, d.h. daß in diesem Datenstrom keine Lücken auftreten. Andererseits kann ein derartiger Pufferspeicher einen Überlauf von Daten innerhalb des Farbdecoders verhindern. Der Pufferspeicher kann ferner dazu eingesetzt werden, Zeitbasis-Schwankungen des Bildsignals und damit auch der Komponentensignale zu korrigieren.

## Patentansprüche

1. Schaltungsanordnung mit einem digitalen Farbdecoder (3), welcher ein digitales Farbsignal eines Bildsignals decodiert, wobei das Farbsignal in einem ersten Abtasttakt vorliegt, der auf die Eigenschaften des Farbsignals und/oder des Bildsignals optimiert ist,
dadurch gekennzeichnet,
daß dem Farbdecoder ein Abtastratenumsetzer (4) nachgeschaltet ist, der die vom Decoder ermittelten digitalen Farbkomponentensignale in einen zweiten Abtasttakt umsetzt, der an Anforderungen nachgeschalteter Schaltungselemente (5) zur Signalverarbeitung und/oder Bilddarstellung anpaßbar ist.

2. Schaltungsanordnung nach Anspruch 1, dadurch gekennzeichnet, daß dem digitalen Farbdecoder ein Analog/Digital-Umsetzer (1;2) vorgeschaltet ist, der ein diesem zugeführtes Farbsignal und ggf. Bildsignal in ein digitales Signal mit dem ersten Abtasttakt umsetzt.

3. Schaltungsanordnung nach Anspruch 1 oder 2, dadurch gekennzeichnet, daß in dem Abtastratenumsetzer (4) ein Pufferspeicher vorgesehen ist, mittels dessen sichergestellt wird, daß der Farbdecoder (3) ausgangsseitig einen kontinuierlichen Datenstrom der Farbkomponentensignale in dem zweiten Abtasttakt liefert, und daß der Pufferspeicher vorzugsweise auch zur Korrektur ggf. in dem Farbsignal vorhandener Zeitbasisschwankungen eingesetzt wird.

4. Schaltungsanordnung nach einem der Ansprüche 1 bis 3,
dadurch gekennzeichnet, daß der zweite Abatsttakt aus dem ersten Abtasttakt abgeleitet wird.

5. Schaltungsanordnung nach einem der Ansprüche 1 bis 4,
dadurch gekennzeichnet, daß der erste Abtasttakt aus der Zeilenfrequenz des Bildsignals abgeleitet ist.

6. Schaltungsanordnung nach einem der Ansprüche 1 bis 5,
dadurch gekennzeichnet, daß der erste Abtasttakt aus der Frequenz des Farbilfsträgers des Farbsignals abgeleitet ist.

7. Schaltungsanordnung nach einem der Ansprüche 1 bis 6,
dadurch gekennzeichnet, daß der zeite Abtasttakt so gewählt ist, daß eine Umwandlung des Bild-Seiten-/Höhen-Verhältnisses des Farb- bzw. Bildsignals erzielt wird.

8. Schaltungsanordnung nach einem der Ansprüche 1 bis 7,
dadurch gekennzeichnet, daß der zweite Abtasttakt an einem in einer nachgeschalteten Bilddarstellungs-Signalverarbeitung eines Personalcomputers vorgesehenen Abtasttakt orientiert ist.

9. Schaltungsanordnung nach einem der Ansprüche 1 bis 7,
dadurch gekennzeichnet, daß der zweite Abtasttakt an einem in einer nachgeschalteten Signalverarbeitung eines Videorekorders vorgesehenen Abtasttakt orientiert ist.

10. Bildwiedergabegerät mit einer Schaltungsanordnung nach einem der Ansprüche 1 bis 8.

11. Videorekorder mit einer Schaltungsanordnung nach Anspruch 9.
